Europäisches Patentamt

European Patent Office

Office européen des brevets

(11) Veröffentlichungsnummer: **0 208 003**
**B1**

(12) **EUROPÄISCHE PATENTSCHRIFT**

(45) Veröffentlichungstag der Patentschrift: **09.05.90**

(21) Anmeldenummer: **85108370.9**

(22) Anmeldetag: **05.07.85**

(51) Int. Cl.⁵: **B 62 J 11/00**

(54) Schirmhalterung für ein Fahrrad oder dergleichen offenes Fahrzeug.

(43) Veröffentlichungstag der Anmeldung:
**14.01.87 Patentblatt 87/03**

(45) Bekanntmachung des Hinweises auf die
Patenterteilung: **09.05.90 Patentblatt 90/19**

(84) Benannte Vertragsstaaten:
**AT BE CH DE FR GB IT LI LU NL SE**

(56) Entgegenhaltungen:
**CH-A- 86 129**
**DE-A-2 838 132**
**GB-A- 526 993**
**GB-A- 526 994**
**US-A-4 244 550**

(73) Patentinhaber: **Winterkamp, Dieter**
**Claus-Wenzeslaus-Strasse 3**
**D-8980 Obersdorf (DE)**

(72) Erfinder: **Winterkamp, Dieter**
**Claus-Wenzeslaus-Strasse 3**
**D-8980 Obersdorf (DE)**

(74) Vertreter: **Patentanwälte Grünecker, Kinkeldey,**
**Stockmair & Partner**
**Maximilianstrasse 58**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf eine Schirmhalterung für ein Fahrrad oder dergleichen offenes Fahrzeug nach dem Oberbegriff des Anspruchs 1.

Eine solche Schirmhalterung ist aus der US-A-4 244 550 bekannt.

Bei der bekannten Halterung besteht der Haltekopf aus einer Platte, die am oberen Ende einer im wesentlichen vertikal angeordneten Haltestange befestigt ist und die einen wannenförmigen Abschnitt von halbkreisförmigem Querschnitt aufweist, dessen Achse sich parallel zu der Haltestange erstreckt. An der Platte ist ein Montageblock befestigt, und an diesem ist ein sich seitlich erstreckender Hebel angelenkt, der am freien Ende einen Puffer trägt, der gegen den Grund des wannenförmigen Abschnitts gerichtet ist. An dem Montageblock ist fernerhin ein Stellbügel schwenkbar befestigt, mit dessen Hilfe der genannte Hebel so einstellbar ist, daß der Puffer gegen den Grund des wannenförmigen Abschnitts drückt und dabei einen Schirmgriff an diesem festklemmen kann.

Aus dem DE-U-71 22 418 ist eine Schirmhalterung für ein Fahrrad bekannt, bestehend aus einer Winkelschraube, deren einer Schenkel mittels einer Plastikschelle an der Lenkstange eines Fahrrades zu befestigen ist und deren anderes Ende eine aus zwei beweglichen Backen bestehende Spanneinrichtung trägt, in die die Tragstange eines Regenschirmes eingespannt werden kann. Wegen der Verwendung einer einzelnen Plastikschelle als Befestigungselement an der Lenkstange des Fahrzeuges ist die Befestigung der Winkelschraube sehr unsicher. Insbesondere ist diese Art der Befestigung nicht in der Lage, die von dem Regenschirm bei Windbelastungen ausgehenden Momente aufzunehmen und auf die Lenkstange des Fahrrades zu übertragen. Weiterhin ist die Befestigung des Schirmes mittels der Klemmbacken sehr umständlich, weil die Klemmbacken beim Lösen der sie zusammenspannenden Flügelmutter sich gegeneinander verdrehen können. Die Flügelmutter muß ausreichend weit gelöst werden, daß ein dem Durchmesser der Schirmstange entsprechender Spalt zwischen den Klemmbacken gebildet wird, damit die Schirmstange durch diesen Spalt hindurch in die halbzylindrischen Vertiefungen eingeführt werden kann, die an den einander gegenüberstehenden Flächen der Klemmbacken ausgebildet sind. Ein sehr schnelles Befestigen und Einrichten eines Regenschirmes ist mit dieser Vorrichtung nicht möglich.

Aus der DE-C-2838132 ist eine Halterung für einen Schirm in aufgespanntem Zustand an einem zylindrischen Teil eines offenen Fahrzeuges, insbesondere eines Fahrrades bekannt, bestehend aus einer um das zylindrische Teil des Fahrzeugs gelegten, eine zylindrische Bohrung aufweisenden Klemmschelle, in die lösbar eine gekröpfte Tragstange eingesetzt ist, in die die Griffstange eines Schirms einsteckbar ist. Diese Halterung ist somit nur für solche Schirme geeignet, die keinen Griff aufweisen. Für den praktischen Gebrauch ist diese Vorrichtung daher wenig geeignet, ganz abgesehen davon, daß grifflose Regenschirme auf dem Markt nicht angeboten werden.

Der Erfindung liegt die Aufgabe zugrunde, eine Schirmhalterung der eingangs genannten Art anzugeben, mit der schnell und sicher ein Regenschirm an seinem Griff an dem Fahrzeug befestigt und gegebenenfalls eingestellt werden kann.

Diese Aufgabe wird durch die kennzeichnenden Merkmale des Patentanspruchs 1 gelöst. Vorteilhafte Ausgestaltungen der Erfindung sind Gegenstand der Unteransprüche.

Die Erfindung schafft eine Halterung, die insbesondere für Schirme, die mit einem abgewinkelten oder U-förmig gestalteten Griff versehen sind, geeignet ist, doch läßt sich die Halterung bei entsprechender Anpassung auch mit Schirmen verwenden, die einen geraden, sich längs der Schirmachse erstreckenden Griff aufweisen.

Das Befestigen und Lösen des Schirmes an bzw. von der Halterung kann sich besonders schnell vollziehen, da zum Festspannen ein Keil verwendet wird, der unschwierig anzubringen und zu lösen ist. Dabei weist die Halterung aufgrund ihrer Konstruktion den Vorteil auf, daß sie sich an unterschiedliche Griffabmessungen von selbst anpaßt, es muß dazu lediglich der Keil mehr oder minder tief in die Schiene des Kopfes der Haltevorrichtung eingeschoben werden.

Ein weiterer Vorteil ist, daß eine Einstellung des Schirmes in wenigstens einer Richtung unschwierig schon beim Anbringen des Schirmes an dem Kopf möglich ist, ohne daß hierzu eine Gelenkverbindung geöffnet werden muß.

Die Erfindung und weitere vorteilhafte Merkmale derselben werden nachfolgend unter Bezugnahme auf ein in den Zeichnungen dargestelltes Ausführungsbeispiel näher erläutert.

Es zeigt:

Fig. 1 in Ansichten von der Seite und von vorn eine Gesamtansicht eines Fahrrades mit einem mittels der Halterung nach der Erfindung daran befestigten Schirm;

Fig. 2 den Kopf der Haltevorrichtung von der Seite;

Fig. 3 einen Schnitt längs der Linie III-III von Fig. 2;

Fig. 4 den Kopfbereich der Haltevorrichtung von vorn;

Fig. 5 die Befestigung der Haltestange der erfindungsgemäßen Schirmhalterung an der Lenkstange eines Fahrrades;

Fig. 6 eine Ansicht der Anordnung nach Fig. 5 von oben, teilweise im Schnitt, und

Fig. 7 eine Ansicht der Anordnung nach Fig. 5 von vorn.

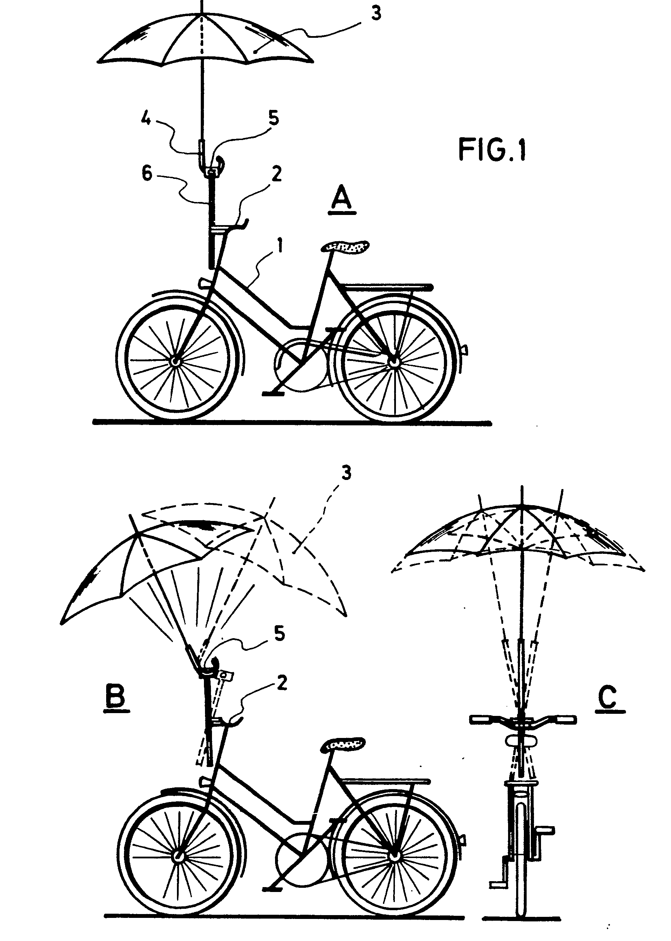

In Fig. 1A erkennt man ein Fahrrad 1, an dessen Lenkstange 2 mittels einer Halterung ein Regenschirm 3 am Griff 4 desselben befestigt ist. Der Griff des Regenschirms 3 ist, wie ersichtlich, spazierstockartig gestaltet. Die Halterung besteht aus einem den Schirmgriff 4 haltenden Kopf 5, der am oberen Ende einer Haltestange 6 befestigt ist, die ihrerseits an der Lenkstange 2 des Fahrrades 1 befestigt ist. Es ist ein besonderer Vorteil der Erfindung, daß, wie Fig. 1B zeigt, der Schirm an dem Kopf 5 nach vorn und hinten geneigt werden kann oder, wie Fig. 1C zeigt, die Haltestange 6 seitlich geneigt werden kann, wie in diesen Figuren, teilweise mit gestrichelten Linien, eingezeichnet ist. Auch kann die Haltestange 6, wie Fig. 1B mit gestrichelten Linien zeigt, insgesamt in unterschiedlichen Neigungen an der Fahrradlenkstange 2 befestigt werden.

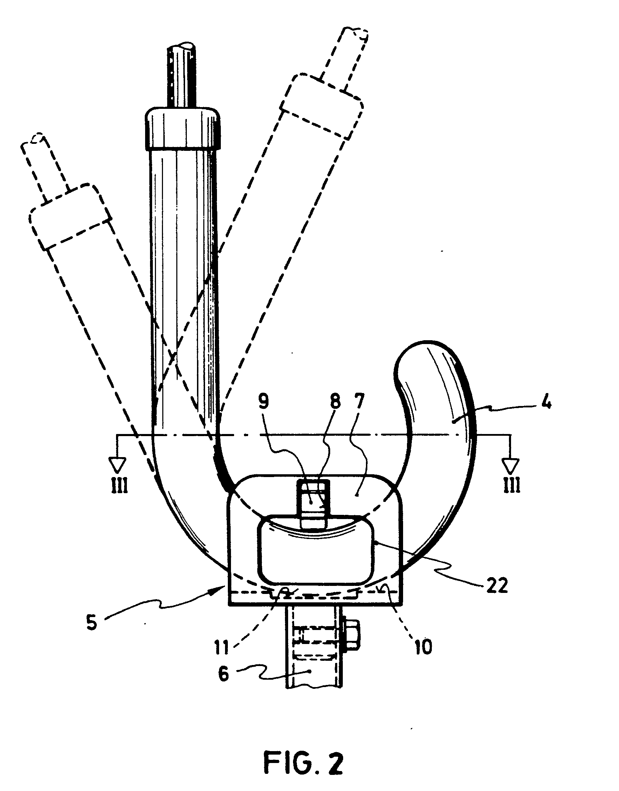

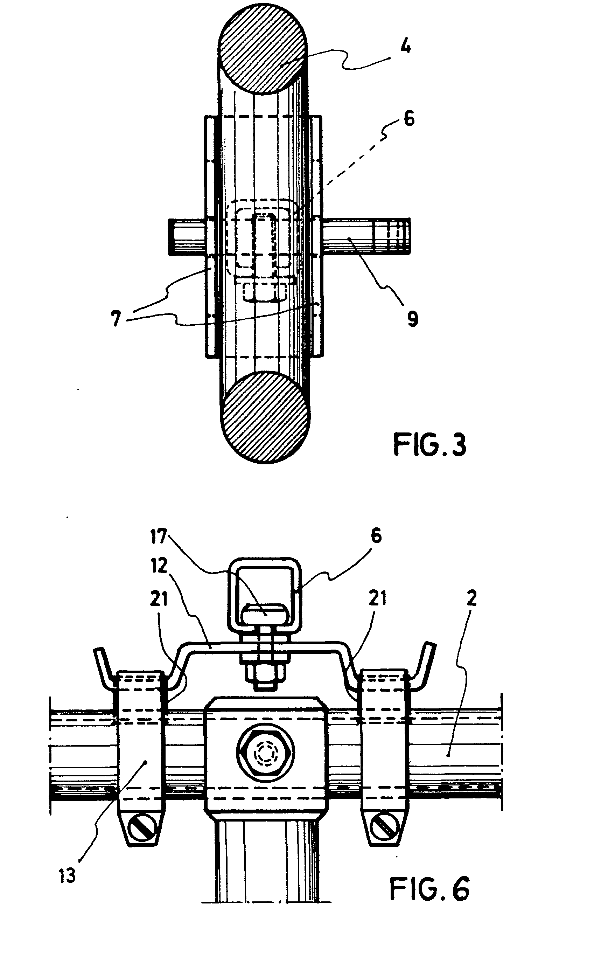

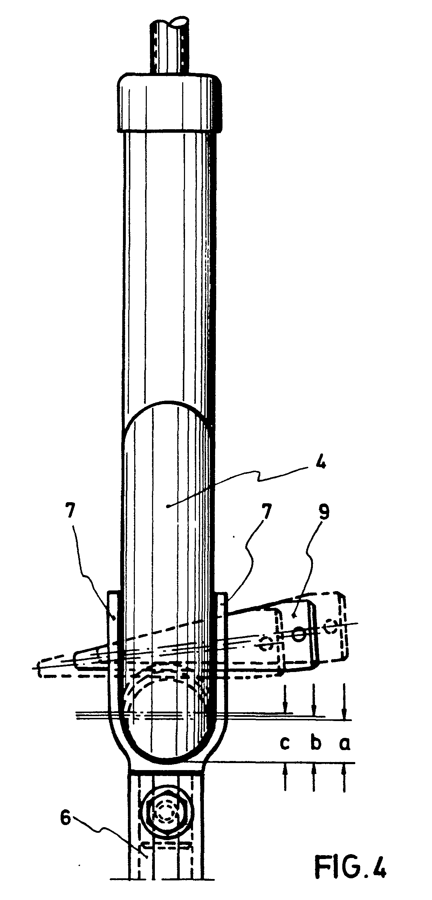

Gemäß Fig. 2 enthält die Halterung einen Kopf 5 am oberen Ende der Haltestange 6. Dieser Kopf 5 besteht gemäß den Figuren 2 und 3 aus einer Schiene von im wesentlichen U-förmigem Querschnitt, dessen lichte Innenweite groß genug ist, um den Griff 4 des Regenschirms aufnehmen zu können, wie aus Fig. 3 ersichtlich ist. Die einander gegenüberstehenden Schenkel 7 der Schiene 5 sind an einander gegenüberliegenden Stellen mit einem Durchbruch 8 zum Einstecken eines Keiles 9 versehen. Dieser ist besonders in Fig. 4 gut erkennbar.

Der Grund oder Boden 10 der Schiene 5 ist in dem Bereich, in welchem der Keil 9 wirksam ist, vorzugsweise mit einer Vertiefung 11 versehen.

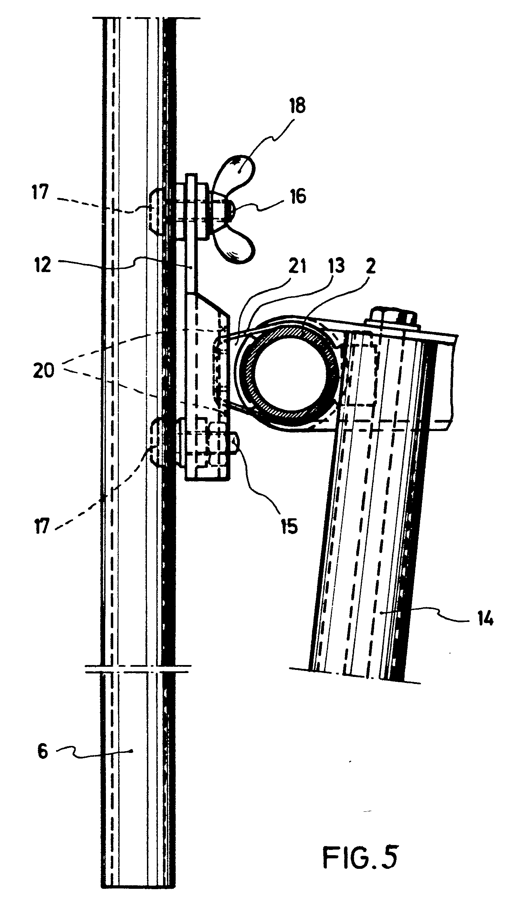

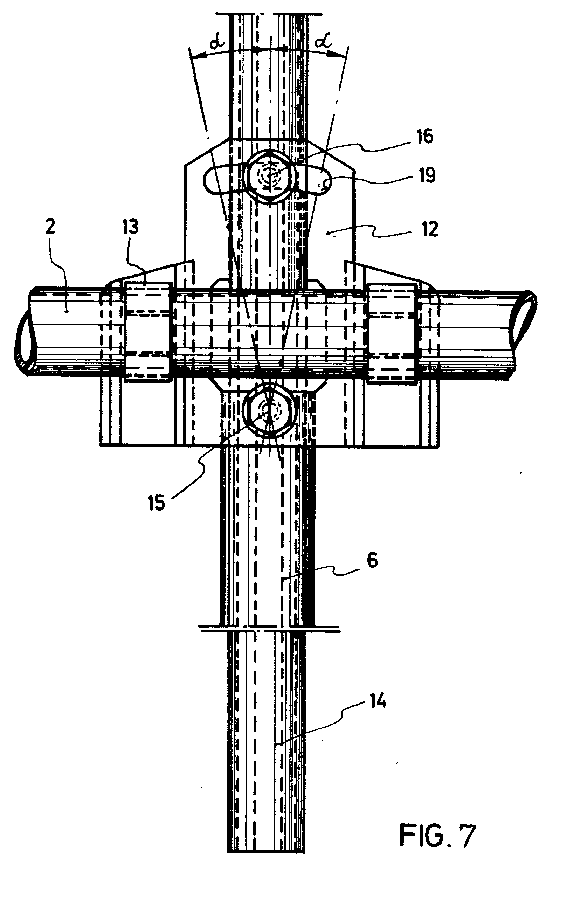

Wie aus Fig. 5 zu entnehmen ist, wird die Haltestange 6 von einer Spannplatte 12 gehalten, die ihrerseits mittels Rohrschellen 13 an der Lenkstange 2 des Fahrrades befestigt ist, von dem in Fig. 2 die Lenksäule 14 zu erkennen ist. Die Spannplatte 12 ist etwa schwalbenschwanzförmig ausgebildet (Fig. 7). Die Haltestange besteht aus einem Rohr von vorzugsweise quadratischem Querschnitt (Fig. 3), das in wenigstens einem Teilbereich mit einem Schlitz versehen ist. Diesen Schlitz durchgreifen Schrauben 15 und 16, deren Köpfe 17 innerhalb der Haltestange 6 angeordnet sind. Die beiden Schrauben 15 und 16 sind im Abstand zueinander angeordnet und an der Spannplatte 12 mittels Muttern befestigt, von denen im vorliegenden Beispiel die der oberen Schraube 16 zugehörige Mutter als Flügelmutter 18 ausgebildet ist, um von Hand gelöst werden zu können. Die zugehörige Schraube 16 durchgreift einen bogenförmigen Schlitz 19 in der Spannplatte 12, wodurch es möglich ist, die Haltestange 6 um einen Winkel α von beispielsweise 12 bis 15° nach beiden Seiten gegenüber der Mittelstellung zu verschwenken, wie die Figuren 7 und 1C zeigen.

Aufgrund der geschlitzten Ausführung der Haltestange 6 ist es möglich, nach Lockern der Schraubverbindungen an der Spannplatte 12 die Haltestange in der Höhe einzustellen.

Die Spannplatte 12 ist, wie Fig. 6 zeigt, durch eine spezielle längslaufende Profilierung versteift. Die Rohrschellen 13 sind durch Schlitze 20 in der Spannplatte 12 geführt. Ein elastischer, an die Kontur der Lenkstange 2 angepaßter Pufferkörper 21 aus einem Material hoher Oberflächenreibung, beispielsweise aus Gummi, insbesondere Silikongummi, ist zwischen die Spannplatte 12 und die Lenkstange 2 jeweils im Bereich der Rohrschellen 13 eingespannt und verhindert eine Verdrehung der Spannplatte 12 gegenüber der Lenkstange 2 nach dem Festziehen der Rohrschellen 13.

Es ist weiterhin vorteilhaft, wenn die Schiene 5 an ihrer Innenseite mit einem elastischen Material hoher Oberflächenreibung beschichtet ist, um eine Bewegung des mittels des Keiles 9 festgespannten Griffes in der Schiene bestmöglich zu behindern.

Die Teile der Halterung, mit Ausnahme der erwähnten elastischen Teile, bestehen zweckmäßigerweise aus Stahl, rostfrei oder verchromt, oder aus Aluminium, für den Keil empfiehlt sich jedoch ein schlagzähes Kunststoffmaterial, beispielsweise Polyäthylen, Polypropylen, Hartgummi oder dergleichen.

Für den Gebrauch wird nach Anbringen der Spannplatte 12 an der Lenkstange 2 des Fahrrades die Haltestange 6 nach Lockern der Muttern 18 in die vom Benutzer gewünschte Höhe gebracht und dann in dieser durch Festziehen der Muttern 18 gesichert. Zum Befestigen eines Regenschirmes braucht dieser nur einfach mit seinem Griff zwischen die Schenkel 7 der U-förmigen Schiene eingeführt zu werden und wird dann durch Einschieben des Keiles 9 in die Öffnungen 8 dort festgespannt. Dabei kann gemäß Fig. 2 beim Festspannen des Griffes in der Schiene 5 die vom Benutzer gewünschte Winkellage der Schirmstange eingestellt werden. Die Vertiefung 11 im Boden 10 der Schiene 5 hilft dabei, den im vorliegenden Beispiel U- oder hakenförmig gebogenen Griff 4 in einer definierten Stellung mittels des Keiles 9 festzulegen.

Wie Fig. 4 sehr anschaulich zeigt, ist die Schirmhalterung nach der Erfindung in der Lage, sich auf verschiedene Durchmesser von Schirmgriffen selbsttätig einzustellen, ohne daß Veränderungen vorgenommen werden müssen. Es braucht dazu nur einfach der Keil 9 entsprechend tief eingeschoben zu werden. Unterschiedliche Durchmesser von Schirmgriffen sind in Fig. 4 mit unterschiedlichen Radien a, b und c angedeutet.

Es ist günstig, wenn die Schirmfläche nicht kreisangenähert, sondern etwa rechteckig ist, um auf diese Weise den Einfluß der Fahrbewegung in gewissem Maße auszugleichen.

Um den Schirm 3 bei Nichtgebrauch verstauen zu können, sind in den einander gegenüberstehenden Schenkeln 7 der Schiene 5 an sich gegenüberstehenden Stellen jeweils ein Durchbruch 22 geeigneter Größe ausgebildet, in den der Schirm 3 im zusammengefalteten Zustand wie in einen Köcher eingeschoben werden kann. Er verläuft dann etwa parallel zur Lenkstange 2, wobei er über die Lenkstangenbreite nicht wesentlich hinaussteht.

**Patentansprüche**

1. Schirmhalterung für ein Fahrrad oder dergleichen offenes Fahrzeug, bestehend aus einer an dem Fahrzeug befestigbaren Haltevorrichtung mit einem Haltekopf am Ende einer Haltestange, der einen wannenförmigen Querschnitt aufweist, und einer dem Haltekopf zugeordneten Spanneinrichtung, die im Gebrauch der Halterung an einem in den Haltekopf eingesetzten Schirmgriff anliegt und auf diesen eine gegen den Grund des wannenförmigen Querschnitts des Haltekopfes gerichtete Haltekraft aufbringt, dadurch gekennzeichnet, daß der wannenförmige Querschnitt zwei einander parallele Seitenschenkel (7) aufweist, die sich gegenüberstehen und zusammen mit dem sie verbindenden Schenkel als Schiene (5) ausgebildet sind, die querlaufend an der Haltestange (6) befestigt ist, und daß in den Seitenschenkeln (7) an einander gegenüberliegenden Stellen im Abstand über dem Grund (10) des Querschnitts Durchbrüche (8) ausgebildet sind, in die ein den Innenraum der Schiene (5) quer durchdringender Spannkeil (9) als Spanneinrichtung eingeschoben bzw. einschiebbar ist.

2. Schirmhalterung nach Anspruch 1, dadurch gekennzeichnet, daß die Schiene (5) auf ihrer Innenseite mit einem elastischen Material hoher Oberflächenreibung ausgekleidet ist.

3. Schirmhalterung nach Anspruch 2, dadurch gekennzeichnet, daß das elastische Material Gummi, insbesondere Silikongummi ist.

4. Schirmhalterung nach einem der vorhergehenden Ansprüche, dadurch gekennzeichnet, daß der Grund (10) der Schiene (5) im Bereich der Durchbrüche (8) eine Vertiefung (11) aufweist.

5. Schirmhalterung nach einem der vorhergehenden Ansprüche, dadurch gekennzeichnet, daß die Haltestange(6)aus einer in wenigstens einem Teilbereich geschlitzten Hohlprofilschiene besteht und daß wenigstens zwei Spannschrauben (15, 16) vorgesehen sind, deren Köpfe (17) in der Hohlprofilschiene angeordnet sind und die den Schlitz durchdringen und im Abstand zueinander an einer mit dem Fahrzeug verbundenen Spannplatte (12) befestigt sind.

6. Schirmhalterung nach einem der vorhergehenden Ansprüche, dadurch gekennzeichnet, daß die Haltestange (6) gelenkig einstellbar an der Spannplatte (12) befestigt ist.

7. Schirmhalterung nach einem der Ansprüche 5 und 6, dadurch gekennzeichnet, daß die Spannplatte (12) mittels Rohrschellen (13) an der Lenkstange (2) eines Fahrrades (1) befestigt ist.

8. Schirmhalterung nach Anspruch 7, dadurch gekennzeichnet, daß die Schiene (5) sich quer zur Lenkstange (2) des Fahrrades (1) erstreckt.

9. Schirmhalterung nach einem der vorhergehenden Ansprüche, dadurch gekennzeichnet, daß die einander parallelen Schenkel (7) der Schiene (5) je einen Durchbruch (22) zum Durchstecken eines zusammengefalteten Schirms (3) aufweisen.

10. Schirmhalterung nach Anspruch 6, dadurch gekennzeichnet, daß die Haltestange (6) mittels zweier lösbarer Schrauben (15, 16) an der Spannplatte (12) befestigt ist, von denen die eine Schraube (16) einen in der Spannplatte (12) ausgebildeten, bogenförmig verlaufenden Schlitz (19) durchdringt, dessen Krümmungsmittelpunkt in der Achse der anderen Schraube (15) liegt.

**Revendications**

1. Fixation de parapluie pour une bicyclette ou un véhicule ouvert similaire, composée d'un dispositif de maintien pouvant être fixé sur le véhicule et comprenant une tête de maintien qui se trouve à l'extrémité d'une tige de maintien et présente une section transversale en forme de cuvette, et d'un dispositif de serrage qui est associé à la tête de maintien, prend appui, lorsque la fixation est utilisée, sur une poignée de parapluie mise en place dans la tête de maintien et applique sur ladite poignée une force de maintien orientée vers le fond de la section transversale en forme de cuvette de la tête de maintien, caractérisée en ce que la section transversale en forme de cuvette présente deux ailes latérales (7) parallèles qui se font face et forment avec l'aile qui les relie un rail (5) qui est fixé transversalement sur la tige de maintien (6) et en ce que des ouvertures (8) dans lesquelles un dispositif de serrage se présentant sous la forme d'une clavette de serrage (9) traversant transversalement l'espace intérieur du rail (5) est introduit ou peut être introduit, sont réalisées dans les ailes latérales (7), à des endroits disposés l'un en face de l'autre, à distance au-dessus du fond (10) de la section transversale.

2. Fixation de parapluie selon la revendication 1, caractérisée en ce que le rail (5) est revêtu sur son côté intérieur d'un matériau élastique présentant un important frottement superficiel.

3. Fixation de parapluie selon la revendication 2, caractérisée en ce que le matériau élastique est du caoutchouc, en particulier du caoutchouc silicone.

4. Fixation de parapluie selon l'une des revendications précédentes, caractérisée en ce que le fond (10) du rail (5) présente un creux (11) dans la zone des ouvertures (8).

5. Fixation de parapluie selon l'une des revendications précédentes, caractérisée en ce que la tige de maintien (6) est composée d'un rail profilé creux fendu dans au moins une zone partielle et en ce qu'il est prévu au moins deux vis de serrage (15, 16) dont les têtes (17) sont disposées dans le rail profilé creux et qui traversent la fente et sont fixées à distance l'une de l'autre sur une plaque de serrage (12) reliée au véhicule.

6. Fixation de parapluie selon l'une des revendications précédentes, caractérisée en ce que la tige de maintien (6) est articulée sur la plaque de serrage (12) de manière à pouvoir être réglée.

7. Fixation de parapluie selon l'une des revendications 5 et 6, caractérisée en ce que la plaque de serrage (12) est fixée à l'aide de colliers pour tuyaux (13) sur le guidon (2) d'une bicyclette (1).

8. Fixation de parapluie selon la revendication 7, caractérisée en ce que le rail (5) s'étend transversalement au guidon (2) de la bicyclette (1).

9. Fixation de parapluie selon l'une des revendications précédentes, caractérisée en ce que les ailes (7) parallèles du rail (5) présentent chacune une ouverture (22) destinée à recevoir un parapluie (3) replié.

10. Fixation de parapluie selon la revendication 6, caractérisée en ce que la tige de maintien (6) est fixée sur la plaque de serrage (12) à l'aide de deux vis amovibles (15, 16) dont l'une (16) traverse une fente (19) réalisée dans la plaque de serrage (12) et s'étendant en forme d'arc dont le centre de courbure se trouve dans l'axe de l'autre vis (15).

## Claims

1. Umbrella mount for a bicycle or similar open-top vehicle, consisting of a holding device, mountable on the vehicle, including a holding head at the end of a holding bar of tub-shaped cross-section, and a tensioning device associated with the holding head, which device, whilst the holding device is in use, abuts against the umbrella handle which is placed into the holding head and exerts pressure on the handle towards the bottom of the tub-shaped cross-section of the holding head, characterised in that the tub-shaped cross-section had two sideshanks (7) parallel and opposite to each other and which, together with the interconnecting shank, are arranged to form a track (5), which is transversely mounted onto the holding bar (6), and that the sideshanks (7) have openings (8) at opposing locations at a distance above the bottom (10) of the cross-section, into which openings a tensioning wedge (9) serving as tensioning means is inserted or insertable to run transversely through the inside of the track (5).

2. Umbrella mount according to claim 1, characterised in that the track (5) is coated on its inside with an elastic material of high surface friction.

3. Umbrella mount according to claim 2, characterised in that the elastic material is rubber, in particular silicon rubber.

4. Umbrella mount according to one of the above claims, characterised in that the bottom (10) of the track (5) has a recess (11) in the area of the openings (8).

5. Umbrella mount according to one of the above claims, characterised in that the holding bar (6) consists of a hollow-section track, slotted in at least one section, and that at least two tensioning screws (15, 16) are provided, the heads (17) of which are accommodated in the hollow-section track and penetrate the slot and are attached at a distance to each other onto a tension plate (12) which is mounted to the vehicle.

6. Umbrella mount according to one of the above claims, characterised in that the holding bar (6) is mounted on to the tension plate (12) to be swivelling and adjustable.

7. Umbrella mount according to one of the claims 5 and 6, characterised in that the tension plate (12) is mounted onto the handle bar (2) of the bicycle (1) by way of tube clamps (13).

8. Umbrella mount according to claim 7, characterised in that the track (5) extends transversely to the handle bar (2) of the bicycle (1).

9. Umbrella mount according to one of the above claims, characterised in that the parallel shanks (7) of the track (5) have each one opening (22) for passing through of a folded umbrella (3).

10. Umbrella mount according to claim 6, characterised in that the holding bar (6) is attached to the tension plate (12) by means of two releasable screws (15, 16), one screw (16) of which passes through an arcshaped slot (19) in the tension plate (12), the arc-centre of which lies in the axis of the other screw (15).

EP 0 208 003 B1

FIG.1

1

FIG. 2

EP 0 208 003 B1

FIG.3

FIG.6

3

4

FIG.4

EP 0 208 003 B1

FIG.5

5

FIG. 7